# EUROPÄISCHE PATENTANMELDUNG

(11) **EP 0 597 310 A1**
(43) Veröffentlichungstag der Anmeldung: **18.05.1994**
(21) Anmeldenummer: 93117283.7
(22) Anmeldetag: 26.10.1993
(51) Int. Cl.: B23Q 17/09

(54) **Überwachungseinrichtung für Werkzeuge einer Bearbeitungsmaschine**

(30) Priorität: 13.11.1992 DE 4238338
(71) Anmelder: Gebr. Heller Maschinenfabrik GmbH, D-72622 Nürtingen (DE)
(72) Erfinder: Kneule, Rolf, D-72636 Frickenhausen (DE)
(74) Vertreter: Kohl, Karl-Heinz

(57) **Zusammenfassung**

Die Überwachungseinrichtung hat einen Meßwertaufnehmer, der eine beim Bearbeiten mit dem Werkzeug (13) auftretende, auf eine Werkzeugspindel (1) wirkende Kraft erfaßt und ein entsprechendes Signal an eine Signalbearbeitungseinheit (9) liefert. Der Meßwertaufnehmer ist eine berührungslos arbeitender Wegsensor (6), dem mit Abstand mindestens eine Bezugsfläche (4) gegenüberliegt. Relativ zu ihr mißt der Wegsensor (6) die jeweils auftretende Abstandsänderung während des Bearbeitungsvorganges. Mit der Einrichtung kann das Werkzeug (13) hinsichtlich Verschleiß und/oder Bruch zuverlässig überwacht werden. Die Überwachungseinrichtung läßt sich einfach montieren und ist für den Einsatz bei Mehrspindelköpfen geeignet.

## Beschreibung

Die Erfindung betrifft eine Überwachungseinrichtung für Werkzeuge einer Bearbeitungsmaschine nach dem Oberbegriff des Anspruches 1.

Solche Überwachungseinrichtungen werden eingesetzt, um den Verschleiß und/oder den Bruch eines Werkzeuges einer Bearbeitungsmaschine festzustellen (Maschinenmarkt, Würzburg 98 (1992) 1/2 S. 20 bis 25). Bei diesen bekannten Überwachungseinrichtungen werden in die Spindellagerung Meßsysteme wie Meßlager und Meßhülsen integriert. In der Regel erfassen dort Dehnmeßstreifen die Vorschubkraft. Für die Meßlager und Meßhülsen müssen die entsprechenden Bauteile der Bearbeitungsmaschine aufwendig gefertigt werden. Auch ist die Montage dieser Meßlager und Meßhülsen aufwendig. Darum ist eine solche Überwachungseinrichtung insbesondere für Mehrspindelköpfe nicht geeignet.

Es sind auch Überwachungseinrichtungen bekannt, die mit der Körperschallmessung arbeiten. Der Werkstoffabrißvorgang beim Werkzeugbruch wird von einer Körperschallemission im Ultraschallbereich begleitet. Die auftretenden Schallwellen werden erfaßt und der Signalverarbeitungseinheit zugeführt. Allerdings hat ein solches Überwachungssystem erhebliche Nachteile, weil Ultraschallwellen über Fügestellen schlecht und über bewegte Maschinenelemente, wie Wälzlager, gar nicht übertragbar sind.

Der Erfindung liegt die Aufgabe zugrunde, die gattungsgemäße Überwachungseinrichtung so auszubilden, daß mit ihr auf konstruktiv einfache Weise das Werkzeug hinsichtlich Verschleiß und/oder Bruch zuverlässig überwacht werden kann, wobei sich diese Überwachungseinrichtung einfach montieren lassen soll und auch für den Einsatz bei Mehrspindelköpfen geeignet ist.

Diese Aufgabe wird bei der gattungsgemäßen Überwachungseinrichtung erfindungsgemäß mit den kennzeichnenden Merkmalen des Anspruches 1 gelöst.

Bei der erfindungsgemäßen Überwachungseinrichtung arbeitet der Wegsensor berührungslos. Ihm liegt mit Abstand die Bezugsfläche gegenüber, deren Abstand vom Wegsensor abhängig von der bei der Bearbeitung mit dem Werkzeug auftretenden Kraft ist. Solange das Werkstück einwandfrei arbeitet, stellt sich zwischen der Bezugsfläche und dem Wegsensor ein bestimmter Abstand ein, der über einen entsprechenden Signalwert, beispielsweise über einen Spannungswert, erfaßt und der Signalverarbeitungseinheit zugeführt werden kann. Nimmt der Verschleiß des Werkstückes zu, ist eine größere Kraft notwendig, um das Werkstück zu bearbeiten. Dieser größere Kraftaufwand äußert sich in einer Wegeverlagerung der Bezugsfläche relativ zum Wegsensor. Bei dem höheren Kraftaufwand nimmt dieser Abstand ab. Diese Wegveränderung wird vom Wegsensor erfaßt und in Form eines entsprechenden Signalwertes der Signalverarbeitungseinheit zugeführt, die dann ein entsprechendes Signal erzeugt. Tritt ein Werkzeugbruch auf oder ist in die Werkzeugspindel überhaupt kein Werkzeug eingespannt oder befindet sich kein Werkstück in der Bearbeitungsposition, dann fehlt infolge der fehlenden Schnittkraft eine entsprechende, auf die Werkzeugspindel wirkende Kraft, wodurch der Abstand zwischen der Bezugsfläche und dem Wegsensor den größten Wert erreicht. Auch dies wird vom Wegsensor erfaßt und in Form eines entsprechenden Signalwertes der Signalverarbeitungseinheit zugeführt. Die berührungslos arbeitenden Wegsensoren, die Wegverlagerungen erfassen, sind bekannte und kostengünstige Bauteile. Sie können ohne Schwierigkeiten an der jeweiligen Bearbeitungsmaschine vorgesehen werden. Mit diesen berührungslos arbeitenden Wegsensoren ist es in besonders vorteilhafter Weise möglich, bei einem Mehrspindelkopf jeder einzelnen Spindel einen solchen Wegsensor zuzuordnen, wobei jedem Wegsensor jeweils eine Bezugsfläche zugeordnet ist. Dadurch können sämtliche Spindeln des Mehrspindelkopfes gesondert überwacht werden.

Weitere Merkmale der Erfindung ergeben sich aus den weiteren Ansprüchen, der Beschreibung und den Zeichnungen.

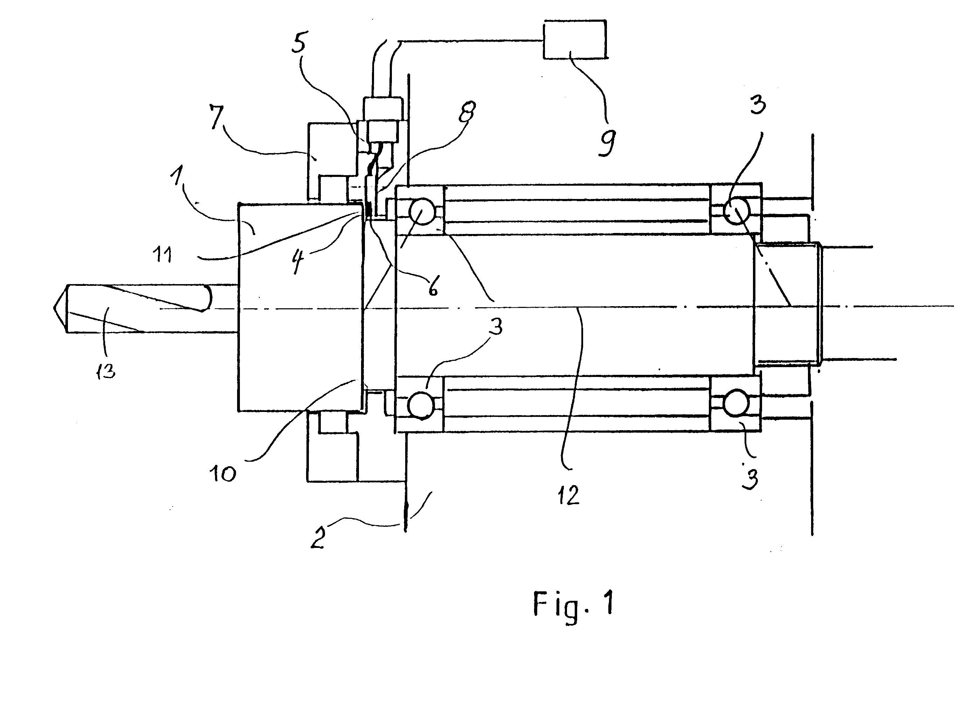

Die Erfindung wird anhand zweier in den Zeichnungen dargestellter Ausführungsbeispiele näher erläutert. Es zeigen
Fig. 1 in schematischer Darstellung eine erste Ausführungsform einer erfindungsgemäßen Überwachungseinrichtung,
Fig. 2 in einer Darstellung entsprechend Fig. 1 eine zweite Ausführungsform einer erfindungsgemäßen Überwachungseinrichtung.

In einem Gehäuse 2 einer nicht näher dargestellten Maschine ist eine Werkzeugspindel 1 drehbar gelagert. Die Werkzeugspindel 1 ist vorzugsweise eine Kurzbohrspindel, kann selbstverständlich aber jede Art von Spindel sein. Sie ist im Gehäuse 2 mit Lagern 3, vorzugsweise Wälzlagern, spielfrei gelagert. Die Spindel 1 hat eine Schulter 10, die im Bereich außerhalb des Gehäuses 2 liegt. Auf die Stirnseite des Gehäuses 2 ist ein Lagerdeckel 5 aufgesetzt, der bis in die Schulter 10 der Spindel 1 ragt. In diesem Lagerdeckel 5 ist ein Wegsensor 6 eingebaut, der als berührungsloser Wegaufnehmer ausgebildet ist. Derartige berührungslose Wegaufnehmer sind bekannt und werden darum nicht näher beschrieben. Der Lagerdekkel 5 hat eine entsprechende Aufnahme, in der dieser Wegsensor 6 untergebracht werden kann. Zum Schutz des Wegsensors 6 ist auf den Lagerdeckel 5 ein zweiter Dekkel 7 aufgesetzt.

Dem Wegsensor 6 ist eine Bezugsfläche 4 an der Werkzeugspindel 1 zugeordnet, die vorteilhaft durch die dem Gehäuse 2 gegenüberliegende Schulterfläche der Schulter 10 der Spindel 1 gebildet wird. Der Wegsensor 6 ist so angeordnet und ausgebildet, daß er Änderungen des Abstandes zur Bezugsfläche 4 erfaßt. Damit der Wegsensor 6 mit dem erforderlichen bzw. zulässigen Abstand 11 zur Bezugsfläche 4 angeordnet werden kann, ist die Anbaufläche 8, die durch den Boden der Aufnahme im Lagerdeckel 5 gebildet ist, entsprechend genau bearbeitet. Auch die Bezugsfläche 4 ist vorteilhaft genau bearbeitet, so daß mit dem Wegsensor 6 die Abstandsmessung präzise vorgenommen werden kann.

Der Wegsensor 6 ist an eine Signalverarbeitungseinheit 9 angeschlossen, die die vom Wegsensor 6 kommenden Signale auswertet. Die Signalverarbeitungseinheit 9 gibt ein entsprechendes Signal ab, das zu einer Anzeige gebracht oder zu einem Abschalten des Antriebes der Werkzeugspindel 1 verwendet werden kann.

Falls die Bezugsfläche 4 nicht exakt in einer Radialebene in bezug auf die Drehachse 12 der Werkzeugspindel 1 liegen sollte, tritt beim Drehen der Werkzeugspindel ein Schlag auf. Dieser Schlag würde, da er gleichbedeutend mit einer Abstandsänderung zwischen Bezugsfläche 4 und Wegsensor 6 ist, zu Signalschwankungen führen, die den Wegsensor 6 zu entsprechenden Signalen veranlassen würden. Solche während der Spindeldrehung auftretenden Signalschwankungen, die in Form einer periodischen Welligkeit auftreten, werden elektronisch kompensiert. Dadurch spricht der Wegsensor 6 bei solchen periodischen Signalschwankungen noch nicht an.

Nach dem Einbau des Wegsensors 6 wird die Werkzeugspindel 1 ohne Belastung drehbar angetrieben. Das hierbei vom Wegsensor 6 erzeugte Signal wird erfaßt und festgehalten. Anschließend wird mit einem in die Werkzeugspindel 1 eingesetzten ordnungsgemäßen Werkzeug 13 gearbeitet. Während der Bearbeitung mit diesem Werkzeug 13 wird das vom Wegsensor 6 erzeugte Signal ebenfalls erfaßt. Durch die beiden so ermittelten Signalwerte wird nun eine geeignete Bandbreite festgelegt, innerhalb der während der Bearbeitung mit einem einwandfreien Werkzeug der Signalwert liegen muß.

Beim Arbeiten mit dem Werkzeug 13 treten axial gerichtete Schnittkräfte in Form einer an der Werkzeugspindel 1 wirkenden Vorschubkraft auf. Unter dem vorwiegend axialen Schnittdruck weicht die komplette Werkzeugspindel 1 infolge der elastischen Verformbarkeit aller an der Lagerung beteiligten Bauelemente axial aus. Dies bedeutet, daß der Abstand zwischen der Bezugsfläche 4 und dem Wegsensor 6 verringert wird. Der berührungslos arbeitende Wegsensor 6 erfaßt während der Drehung der Werkzeugspindel 1 diese Verlagerung über die plan laufende, radial sich erstreckende Bezugsfläche 4 der Werkzeugspindel 1. Das erhaltene Signal, das in der Regel als Spannungswert gemessen wird, ist proportional der Verlagerung der Be-zugsfläche 4. Dieses Signal wird ständig überwacht und in der Signalverarbeitungseinheit 9 entsprechend interpretiert und ausgewertet. Liegt der vom Wegsensor 6 erzeugte Signalwert innerhalb der festgelegten Bandbreite, dann ist das Werkzeug 13 in Ordnung. Liegt der vom Wegsensor 6 erzeugte Signalwert oberhalb der festgelegten Bandbreite, dann ist dies ein Hinweis darauf, daß das Werkzeug 13 stumpf ist und damit die Standzeit zu Ende geht. Bei stumpfen Werkzeugen nimmt die axial wirkende Vorschubkraft zu, wodurch sich die Bezugsfläche 4 näher an den Wegsensor 6 heranbewegt. Durch diesen oberhalb der vorgegebenen Bandbreite liegenden Signalwert erhält der Benutzer den Hinweis, daß ein Werkzeugwechsel vorzunehmen ist.

Liegt der vom Wegsensor 6 erzeugte Signalwert unterhalb der vorgegebenen Bandbreite, dann ist dies ein Hinweis darauf, daß das Werkzeug 13 gebrochen oder kein Werkzeug in der Spindel 1 oder kein Werkstück vorhanden ist. Der Benutzer der Maschine kann dann entsprechend reagieren.

Da während des Drehens der Werkzeugspindel 1 mit dem Wegsensor 6 ständig gemessen wird, kann auch ein während der Bearbeitung auftretender Werkzeugbruch sofort erkannt werden. In diesem Falle tritt eine hohe kurzzeitige Verlagerung der Bezugsfläche 4 relativ zum Wegsensor 6 während der Bearbeitung auf, was einen entsprechenden Signalwert des Wegsensors zur Folge hat. Die Maschine kann dann entweder, gesteuert durch die Signalverarbeitungseinheit 9, automatisch oder von der Bedienungsperson stillgesetzt werden, um eventuelle Folgeschäden zu verhindern.

Die Bandbreite für die Signalwerte wird so festgelegt, daß der bei der Bearbeitung sich ergebende, vom Wegsensor 6 erzeugte Signalwert innerhalb dieses Bereiches liegt. Dadurch ist die Gewähr dafür gegeben, daß die Wegverlagerung infolge der durch die Bearbeitung auftretenden axialen Vorschubkraft und den Schnittdruck zuverlässig überwacht werden kann. Sobald in der beschriebenen Weise Unregelmäßigkeiten auftreten, können die entsprechenden Signalwerte in der beschriebenen Weise dazu herangezogen werden, die entsprechenden Vorsichtsmaßnahmen zu treffen.

Ein Vorteil dieser Überwachungseinrichtung besteht darin, daß sämtliche durch ihre Verformung aktiv an der Schnittkraftaufnahme beteiligten Wälzlagerelemente 3 ein deutliches Signal erzeugen und daß eine Signalbeeinflussung durch Störgrößen, wie zum Beispiel die Reibung von Lagerringen in der Bohrung usw., ausgeschaltet ist. Dadurch läßt sich einwandfrei feststellen, wann ein Werkzeug einen nicht mehr zulässigen Verschleiß aufweist oder beispielsweise gebrochen ist.

Im dargestellten Ausführungsbeispiel befindet sich der Wegsensor 6 im vorderen Bereich der Werkzeugspindel 1. Der Wegmeßsensor 6 kann aber auch am anderen Ende der Werkzeugspindel 1 vorgesehen sein. Auch in diesem Bereich tritt die beschriebene Wegverlagerung der Bezugsfläche relativ zum Wegsensor 6 während der Bearbeitung mit dem Werkzeug 13 auf.

Die Überwachungseinrichtung ist an einem Beispiel erläutert worden, bei dem während der Bearbeitung axial wirkende Kräfte auftreten. Es gibt jedoch auch Maschinen, bei denen radial wirkende Bearbeitungskräfte auftreten. Es ist auch in diesem Falle möglich, mit dem Wegsensor 6 die infolge dieser Bearbeitungskräfte auftretende radiale Auslenkung der Werkzeugspindel zu erfassen und in gleicher Weise auszuwerten wie bei einer axialen Wegeverlagerung. Die Bezugsfläche 4 ist in diesem Falle nicht radial, sondern beispielsweise axial oder schräg zur Achsrichtung der Werkzeugspindel liegend angeordnet, so daß die radialen Bewegungen dieser Bezugsfläche relativ zum Wegsensor erfaßt werden können.

Der Wegsensor 6 ist durch den Deckel 7 geschützt im Lagerdeckel 5 untergebracht und kann bei Bedarf einfach ausgewechselt werden. Der Wegsensor 6 kann aber auch an jeder anderen geeigneten Stelle angeordnet werden, sofern ihm eine entsprechende Bezugsfläche an der Werkzeugspindel zugeordnet ist. Die Anordnung innerhalb des Lagerdeckels 5 hat den Vorteil, daß sich der Wegsensor 6 einfach montieren läßt, insbesondere auch noch nachträglich an bereits vorhandene Maschinen angebaut werden kann. Vorteilhaft ist der Wegsensor 6 in einem Bauteil untergebracht, das selbst keinem Verschleiß unterworfen ist, so daß während der gesamten Einsatzdauer des Wegsensors eine zuverlässige Messung sichergestellt ist.

Mit dem beschriebenen Wegsensor ist es besonders vorteilhaft möglich, mehrspindelige Baueinheiten entsprechend zu überwachen. In diesem Falle kann an jeder Spindel ein Wegsensor vorgesehen sein, so daß die Spindeln einzeln überwacht werden können. Im Gegensatz zu herkömmlichen Überwachungseinrichtungen, bei denen mehrere Spindeln mit einem einzigen Sensor gleichzeitig erfaßt werden, ergibt sich dadurch eine überraschend einfache und zuverlässige Kontrolle jeder einzelnen Spindel. Die beschriebene Ausbildung eignet sich besonders für sogenannte Kurzbohrspindeln, d.h. leicht austauschbare Normspindeln, die bereits als Bezugsfläche 4 eine Schulterfläche aufweisen. Da der Wegsensor 6 am Gehäuse 2 im Lagerdeckel 5 angeordnet ist, ist eine schnelle Spindelmontage möglich. Insbesondere entfallen jegliche mechanischen Justierarbeiten. Es wird lediglich in der beschriebenen Weise mit dem Wegsensor 6 der Signalwert bei einer Belastung mit dem Wert Null und bei einer Belastung bei Bearbeitung mit einem einwandfreien Werkzeug erfaßt und aufgrund dieser beiden ermittelten Werte die jeweilige Bandbreite festgelegt, innerhalb der die Wegverlagerung durch den Schnittdruck liegen muß.

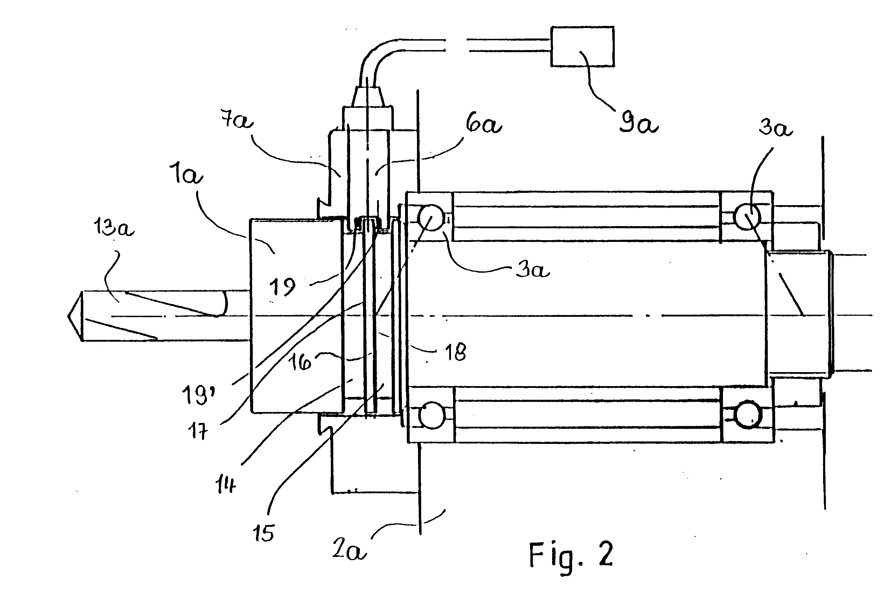

Bei der Ausführungsform gemäß Fig. 2 weist die in den spielfrei angestellten Lagern 3a gelagerte Werkzeugspindel 1 im Bereich außerhalb des Gehäuses 2a zwei Ringnuten 14 und 15 auf, die durch einen Ringsteg 16 voneinander getrennt sind. Seine beiden zueinander parallelen Ringflächen 17 und 18 liegen in Radialebenen der Werkzeugspindel 1a und bilden Bezugsflächen für einen gabelförmigen Wegsensor 6a. Er hat zwei aktive Sensorflächen 19, 19', die den Bezugsflächen 17, 18 mit Abstand gegenüberliegen. Der Wegsensor 6a ist an die Signalverarbeitungseinheit 9a angeschlossen und auf der vom Gehäuse 2a abgewandten Seite von einem Deckel 7a abgedeckt. Im übrigen ist dieses Ausführungsbeispiel gleich ausgebildet wie die vorige Ausführungsform.

Der Wegsensor 6a wird so angeordnet, daß seine Sensorflächen 19, 19' jeweils Abstand von den Bezugsflächen 17, 18 der Werkzeugspindel 1 a haben. Nach dem Einbau des Wegsensors 6a wird die Werkzeugspindel 1 ohne Belastung drehbar angetrieben. Das erzeugte Signal wird in der beschriebenen Weise erfaßt und festgehalten. Anschließend wird mit einem in die Werkzeugspindel 1 eingesetzten ordnungsgemäßen Werkzeug 13a gearbeitet und das vom Wegsensor 6a erzeugte Signal ebenfalls erfaßt. Wiederum wird durch die beiden so ermittelten Signalwerte eine geeignete Bandbreite festgelegt, innerhalb der während der Bearbeitung mit einem einwandfreien Werkzeug der Signalwert liegen muß.

Beim Bearbeiten weicht die Werkzeugspindel 1 infolge der elastischen Verformbarkeit der an der Lagerung beteiligten Elemente elastisch aus. Dadurch wird der Abstand zwischen der Bezugsfläche 17 und der Sensorfläche 19 verringert und der Abstand zwischen der Bezugsfläche 18 und der Sensorfläche 19' vergrößert. Liegt der entsprechend ermittelte Signalwert innerhalb der vorgegebenen Bandbreite, dann ist das Werkzeug 13a in Ordnung.

Ist es hingegen stumpf, ist eine Erhöhung der axial wirkenden Vorschubkraft notwendig, wodurch der Abstand zwischen den Flächen 17 und 19 weiter verringert und der Abstand zwischen den Flächen 18 und 19' entsprechend vergrößert wird. Die Folge hiervon ist ein Signalwert, der oberhalb der vorgegebenen Bandbreite liegt.

Ist das Werkzeug 13a gebrochen oder kein Werkzeug in der Spindel 1 oder kein Werkstück vorhanden, liegt der Signalwert unterhalb der vorgegebenen Bandbreite. Der Abstand zwischen den Flächen 17 und 19 ist vergrößert, während sich der Abstand zwischen den Flächen 18 und 19' entsprechend verringert hat.

Die anhand der vorigen Ausführungsform beschriebenen Vorteile treffen auch für das Ausführungsbeispiel nach Fig. 2 zu.

## Patentansprüche

1. Überwachungseinrichtung für Werkzeuge einer Bearbeitungsmaschine, mit mindestens einem Meßwertaufnehmer, der eine beim Bearbeiten mit dem Werkzeug auftretende, auf eine Werkzeugspindel wirkende Kraft erfaßt und ein entsprechendes Signal an eine Signalverarbeitungseinheit liefert,
dadurch gekennzeichnet, daß der Meßwertaufnehmer ein berührungslos arbeitender Wegsensor (6, 6a) ist, dem mit Abstand mindestens eine Bezugsfläche (4; 17, 18) gegenüberliegt, relativ zu der der Wegsensor die jeweils auftretende Abstandsänderung während des Bearbeitungsvorganges mißt.

2. Überwachungseinrichtung nach Anspruch 1 dadurch gekennzeichnet, daß der Wegsensor (6, 6a) an einem Gehäuse (2, 2a) der Bearbeitungsmaschine angeordnet und die Bezugsfläche (4; 17, 18) an der Werkzeugspindel (1, 1a) vorgesehen ist.

3. Überwachungseinrichtung nach Anspruch 1 oder 2,
dadurch gekennzeichnet, daß der Wegsensor (6, 6a) in einem Lagerdeckel (5, 7a) des Gehäuses (2, 2a) untergebracht ist.

4. Überwachungseinrichtung nach einem der Ansprüche 1 bis 3,
dadurch gekennzeichnet, daß der Wegsensor (6) durch einen weiteren Deckel (7) abgedeckt ist.

5. Überwachungseinrichtung nach einem der Ansprüche 1 bis 4,
dadurch gekennzeichnet, daß die Bezugsfläche (4; 17, 18) zur Erfassung einer axial auf die Werkzeugspindel (1, 1a) wirkenden Vorschubkraft sich radial zur Drehachse (12) der Werkzeugspindel (1, 1a) erstreckt.

6. Überwachungseinrichtung nach einem der Ansprüche 1 bis 4,
dadurch gekennzeichnet, daß die Bezugsfläche (4) zur Erfassung einer quer, vorzugsweise radial auf die Werkzeugspindel (1) wirkenden Kraft quer, vorzugsweise koaxial zur Drehachse (12) der Werkzeugspindel (1) verläuft.

7. Überwachungseinrichtung nach einem der Ansprüche 1 bis 5,
dadurch gekennzeichnet, daß die Bezugsfläche (4) eine radiale Schulterfläche der Werkzeugspindel (1) ist.

8. Überwachungseinrichtung nach einem der Ansprüche 1 bis 5,
dadurch gekennzeichnet, daß die Werkzeugspindel (1 a) einen Ringsteg (16) aufweist, dessen beide Seitenflächen jeweils eine Bezugsfläche (17, 18) bilden.

9. Überwachungseinrichtung nach einem der Ansprüche 1 bis 8,
dadurch gekennzeichnet, daß der Wegsensor (6a) gabelförmig ausgebildet ist und den Bezugsflächen (17, 18) mit Abstand gegenüberliegende Sensorflächen (19, 19') aufweist.

10. Überwachungseinrichtung nach einem der Ansprüche 1 bis 9,
dadurch gekennzeichnet, daß der Wegsensor (6, 6a) am vorderen Spindelende vorgesehen ist.

11. Überwachungseinrichtung nach einem der Ansprüche 1 bis 9,
dadurch gekennzeichnet, daß der Wegsensor (6, 6a) am hinteren, vom Werkzeug (13, 13a) abgewandten Spindelende vorgesehen ist.

12. Überwachungseinrichtung nach einem der Ansprüche 1 bis 11,
dadurch gekennzeichnet, daß bei einer Mehrspindeleinheit der Bearbeitungsmaschine jeder Werkzeugspindel jeweils ein Wegsensor (6, 6a) zugeordnet ist.
